(19) 

Europäisches
Patentamt
European
Patent Office
Office européen
des brevets

(11) **EP 4 455 321 A1**

(12) **EUROPEAN PATENT APPLICATION**
published in accordance with Art. 153(4) EPC

(43) Date of publication:
**30.10.2024  Bulletin 2024/44**

(21) Application number: **22911691.8**

(22) Date of filing: **06.12.2022**

(51) International Patent Classification (IPC):
*C22B 3/22* ^(2006.01)      *C22B 7/00* ^(2006.01)
*C22B 26/12* ^(2006.01)     *C22B 21/00* ^(2006.01)
*C22B 15/00* ^(2006.01)     *C22B 23/02* ^(2006.01)

(52) Cooperative Patent Classification (CPC):
Y02P 10/20; Y02W 30/84

(86) International application number:
**PCT/KR2022/019731**

(87) International publication number:
**WO 2023/121058 (29.06.2023 Gazette 2023/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **21.12.2021  KR 20210183833**

(71) Applicant: POSCO Holdings Inc.
**Pohang-si, Gyeongsangbuk-do 37859 (KR)**

(72) Inventors:
• **HAN, Sang Woo**
  **Pohang-si, Gyeongsangbuk-do 37859 (KR)**

• **KIM, Wan-Yi**
  **Pohang-si, Gyeongsangbuk-do 37859 (KR)**
• **YOON, Sanghyeon**
  **Pohang-si, Gyeongsangbuk-do 37859 (KR)**
• **CHO, Hyunjin**
  **Pohang-si, Gyeongsangbuk-do 37859 (KR)**
• **JUNG, Sungsuk**
  **Pohang-si, Gyeongsangbuk-do 37859 (KR)**

(74) Representative: **Pfenning, Meinig & Partner mbB
Patent- und Rechtsanwälte
Theresienhöhe 11a
80339 München (DE)**

(54) **VALUABLE METAL RECOVERY ALLOY, VALUABLE METAL RECOVERY COMPOSITION, AND METHOD FOR RECOVERING VALUABLE METAL**

(57)     The exemplary embodiments relate to a valuable metal recovery alloy, a valuable metal recovery composition, and a valuable metal recovery method.

According to an exemplary embodiment, the valuable metal recovery alloy may include, based on 100 wt% of the total composition of an alloy, a valuable metal of 45 wt% and a remainder which is impurities, and the valuable metal recovery alloy may satisfy Equation 1 below.

<Equation 1>

$$0.02 \leq [C]/[Ni] \leq 7$$

([C] and [Ni] mean wt% of C and wt% of Ni, respectively)

FIG. 1

Description

[Technical Field]

The present exemplary embodiments relate to recycling of waste battery components, and more particularly, to a method of producing concentrated metals from waste batteries, and more particularly, to a valuable metal recovery alloy, a valuable metal recovery composition, and a method of recovering a valuable metal.

[Background Art]

A problem of disposing of secondary batteries, such as waste batteries from electric vehicles, is emerging around the world. Secondary batteries, especially lithium-ion batteries, have fire problems due to organic solvents, explosive substances, and heavy metals such as Ni, Co, Mn, and Fe. Accordingly, the recovery and recycling process for lithium-ion batteries after the lithium-ion batteries are disposed of has become a very important issue.

Secondary batteries are primarily made of copper (Cu) and aluminum (Al) used as a current collector, lithium (Li), nickel (Ni), cobalt (Co), and manganese (Mn)-containing oxide constituting the cathode, and graphite used as an anode, and are composed of a separator that separates the cathode and the anode, and an electrolyte injected into the separator. The electrolyte may be composed of a solvent and a salt, and the solvent may adopt a mixture of carbonate organic substances such as ethylene carbonate and propylene carbonate, and the salt may adopt, for example, Lithium hexafluorophosphate ($LiPF_6$).

For recycling of the batteries of the secondary battery, such as battery cells, battery modules, and battery packs, a black powder in which the cathode and the anode are mixed is extracted from waste batteries, which are used batteries through a shredding process, a pulverizing process, a specific gravity sorting process, and a magnetic sorting process. The black powder contains, for example, oxides of nickel, cobalt, manganese, lithium, aluminum, and oxygen as the cathode and some impurities such as graphite and mixtures thereof, aluminum and copper as the anode.

A method of recovering the valuable metal from the black powder is largely divided into a wet process and a dry process. In the wet process, through leaching-solvent extraction-lithium production, $NiSO_4$, $CoSO_4$, $MnSO_4$, and $Li_2CO_3$ are produced. The biggest problem when processing the black powder through the wet process is that the graphite, which is the cathode contained in the black powder, is not dissolved in a strong acid atmosphere, so the leaching process takes a long time, and the real yield decreases as the black powder is separated along with the graphite.

In addition, the dry process which is a process of removing aluminum from slag through a high temperature dry process of the black powder, may produce Ni-Co-Mn-C alloy. In the dry process, while CO or $CO_2$ gas is generated by reducing the Ni-Mn-Li-Al-O oxide in the black powder by utilizing graphite and oxygen blowing is utilized at a high temperature, for example, 1400°C to 1600°C, Ni-Co-Mn alloy and lithium and aluminum in slag may be removed. The separated Ni-Co-Mn alloy may undergo the same wet process. Through the leaching-solvent extraction process in the wet process, $NiSO_4$, $CoSO_4$, and $MnSO_4$, are produced, and the carbon is dissolved in the alloy, so the time required for the leaching process is reduced to approximately 70% compared to when the black powder is applied.

However, in the above process, not only the valuable metals lithium and aluminum are consumed as slag, but the lithium becomes impossible to recover. In addition, excessive carbon dioxide may be generated due to the blowing of oxygen to remove graphite in the black powder introduced into the high-temperature dry process, which may cause environmental problems.

Therefore, in order to solve the environmental problem, development of a high-temperature melting reduction process that can minimize carbon dioxide generation, minimize the exhaustion of lithium, a valuable metal, and perform production with a carbon content of 10% or less in the Ni-Co-Mn alloy, and proportions of alloyed components are required.

[Disclosure]

[Technical Problem]

A technical object to be solved by the present invention is to provide a valuable metal recovery alloy which minimizes generation of carbon dioxide in a black powder, provides a high concentration degree of a valuable metal, prevents environmental pollution, and provides a high recovery rate of the valuable metal.

Another technical object to be achieved by the present invention is to provide a valuable metal recovery composition having the advantage.

Yet another technical object to be achieved by the present invention is to provide a method of recovering a valuable metal for providing the valuable metal recovery alloy having the advantage.

**[Technical Solution]**

According to an exemplary embodiment of the present invention, based on 100 wt% of the total composition of an alloy, the valuable metal recovery alloy may include a valuable metal of 45 wt% and a remainder which is impurities, and the valuable metal recovery alloy may satisfy Equation 1 below.

<Equation 1>

$$0.02 \leq [C]/[Ni] \leq 7$$

([C] and [Ni] mean wt% of C and wt% of Ni, respectively)

In an exemplary embodiment, the value metal may be 70 wt% or more. In an exemplary embodiment, the valuable metal recovery alloy may include lithium (Li) of 0.01 to 5 wt%. In an exemplary embodiment, an XRD peak value has at least one diffraction peak among $2\theta = 44° \pm 1°$, $2\theta = 51.5° \pm 1.5°$, and $2\theta = 75.5° \pm 1.5°$.

In an exemplary embodiment, the valuable metal recovery alloy may satisfy Equation 2 below.

<Equation 2>

$$0.1 \langle I_B/I_A \langle 0.98$$

(in Equation 2 above, $I_A$ represents a peak intensity value of $2\theta = 44° \pm 1°$, and $I_B$ represents a peak intensity value of $2\theta = 51.5° \pm 1.5$)

In an exemplary embodiment, the valuable metal recovery alloy may include copper (Cu) of 0.02 wt% or more. In an exemplary embodiment, the copper (Cu) may be bound to nickel (Ni0 among the valuable metals to form an alloy.

In an exemplary embodiment, the valuable metal recovery alloy may include carbon (C) of 0.1 to 10 wt%. In an exemplary embodiment, the valuable metal recovery alloy may include aluminum (Al) of 0.25 to 30 wt%. In an exemplary embodiment, the valuable metal may include at least one of lithium (Li), cobalt (Co), nickel (Ni), aluminum (Al), and manganese (Mn).

According to another exemplary embodiment of the present invention, a valuable metal recovery composition may include: a valuable metal recovery alloy; and a lithium compound, and a lithium content of the composition may be 0.1 to 10 wt%, and a content of a valuable metal in the composition including the lithium content may be 45 wt% or more. In an exemplary embodiment, the valuable recovery alloy may satisfy Equation 1 below.

<Equation 1>

$$0.02 \leq [C]/[Ni] \leq 7$$

([C] and [Ni] mean wt% of C and wt% of Ni, respectively)

In an exemplary embodiment, the lithium compound may be bound to a part of the surface of the valuable metal recovery alloy. In an exemplary embodiment, the lithium compound bound to a part of the surface of the valuable metal recovery alloy may be separated by external force.

In an exemplary embodiment, the valuable metal recovery composition may include a carbon-based material. In an exemplary embodiment, the valuable metal recovery composition may include aluminum (Al) of 10 to 30 wt%. In an exemplary embodiment, the valuable metal may include at least one of lithium (Li), cobalt (Co), nickel (Ni), aluminum (Al), and manganese (Mn).

According to yet another exemplary embodiment of the present invention, a valuable metal recovery method may include: preparing a cell-based battery or battery shredding material; dry heat-treating the shredding material, and separating the heat-treated shredding material by at least one of particle size separation and magnetic separation, and the dry heat-treating of the shredding material may involve a heat treatment condition for performing a high-temperature reduction reaction at 900 to 1800°C without going through a melting step, the heat-treatment condition may satisfy an operating reference temperature of Equation 3 below, and a lithium content is 0.1 to 10 wt% based on 100 wt% of a total composition of a valuable metal recovery composition including a valuable metal recovery alloy and a lithium compound, and a content of a valuable metal in the composition including the lithium content may be 70 wt% or more, and may be recovered from a remainder which is impurities.

<Equation 3>

$$1050 \leq (1550 \pm 250) \times \exp((-0.0005 \times [Cu]) + (-0.01 \times [Al])) \leq 1800$$

(in Equation 3, [Al] represents a content (wt%) of Al included in the shredding material, [Cu] represents a content (wt%) of Cu included in the shredding material, and a unit of a heat treatment condition is °C)

In an exemplary embodiment, the battery shredding material may include aluminum (Al) and copper (Cu). In an exemplary embodiment, the battery shredding material may include aluminum (Al) of 0.5 to 30 wt%. In an exemplary embodiment, the battery shredding material may include copper (Cu) of 2.25 wt% or more.

In an exemplary embodiment, in the separating of the heat-treated shredding material by at least one of particle size separation and magnetic separation, the magnetic separation may be first performed, and then the particle size separation may be performed. In an exemplary embodiment, based on a total composition of 100 wt% of the valuable metal recovery alloy, the valuable metal recovery alloy may include lithium (Li) of 0.1 to 10 wt%, valuable metal of 45 wt% or more, and a remainder which is impurities.

In an exemplary embodiment, the valuable metal recovery method may further include, before the preparing of the battery shredding material, freezing a battery. In an exemplary embodiment, the freezing of the battery may be performed by cooling the battery at -150°C to -60°C.

In an exemplary embodiment, the freezing of the battery may be performed by cooling the battery at -60°C to -20°C under a vacuum atmosphere condition of 100 torr or less. In an exemplary embodiment, the dry heat-treatment may be performed under at least one atmosphere of reducing gas and inert gas. In an exemplary embodiment, in the dry heat-treatment, an average oxygen partial pressure may be 0.01 to 1 atm.

In an exemplary embodiment, the content of the valuable metal of the valuable metal recovery alloy may be concentrated by 150 to 500 wt% compared to the content of the valuable metal of the shredding material. In an exemplary embodiment, in the dry heat-treatment, a lithium compound may be generated.

In an exemplary embodiment, the lithium compound may be bound to a part of the surface of the valuable metal recovery alloy. In another exemplary embodiment, the lithium compound bound to a part of the surface of the valuable metal recovery alloy may be separated by external force.

In an exemplary embodiment, components of the battery shredding material may include nickel (Ni) of 5 to 40 wt%, cobalt (Co) of 1 to 15 wt%, manganese (Mn) of 1 to 15 wt%, lithium (Li) of 0.5 to 5 wt%, and a remaining amount of impurities, and components of the valuable metal alloy may include nickel (Ni) of 10 to 60 wt%, cobalt (Co) of 5 to 20 wt%, manganese (Mn) of 1 to 20 wt%, lithium (Li) of 3 to 15 wt%, and a remaining amount of impurities.

[Advantageous Effects]

According to an exemplary embodiment of the present invention, a valuable metal recovery alloy is provided that can minimize generation of carbon dioxide, and maximize recovery of a valuable metal by reducing a carbon content from a battery shredding material.

According to another embodiment of the present invention, a valuable metal recovery composition is provided, which has the advantage.

According to yet another embodiment of the present invention, provided is a method of recovering a valuable metal for providing the valuable metal recovery alloy having the advantage.

[Description of the Drawings]

FIG. 1 is a photograph of a valuable metal recovery alloy composition and carbon according to an exemplary embodiment of the present invention.

FIG. 2A illustrates an XRD peak of a value metal recovery alloy according to an exemplary embodiment of the present invention, and FIG. 2B is an enlarged diagram of peak intensity values of 44° ± 1°, 51.5° ± 1.5°, and 75.5° ± 1.5° as azimuth angles.

FIGS. 3A and 3B are photographs of an organization of a valuable metal recovery composition according to an exemplary embodiment of the present invention.

FIG. 4 is a flowchart of a method of recovering a valuable metal according to an exemplary embodiment of the present invention.

FIG. 5 is a graph showing a heat treatment condition depending on wt% of copper and aluminum according to an exemplary embodiment of the present invention.

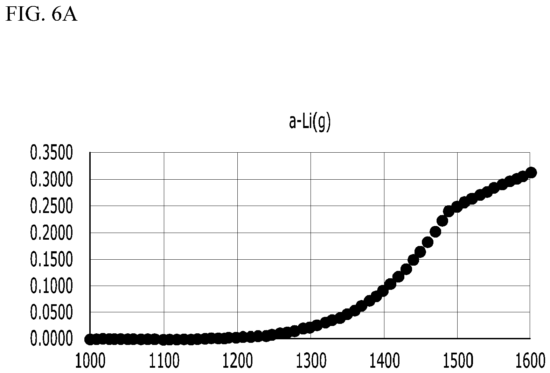

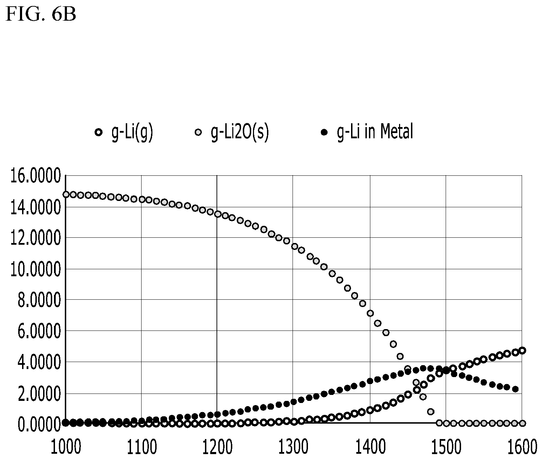

FIG. 6A illustrates the activity of lithium gas according to an exemplary embodiment of the present invention, and FIG. 6B illustrates gas generation amounts of lithium oxide according to an exemplary embodiment of the present invention.

FIG. 7 is a graph of voltage change as a freezing process of a frozen battery is performed, according to an exemplary embodiment of the present invention.

FIGS. 8A and 8B illustrate states before and after shredding of a waste battery according to an exemplary embodiment of the present invention.

**[Mode for Invention]**

Terms including first, second, and third are used for describing various arts, components, regions, layers, and/or sections, but are not limited thereto. The terms are only used to distinguish any part, component, region, layer, or section from the other part, component, region, layer, or section. Accordingly, the first part, component, region, layer, or section described below may be mentioned as the second part, component, region, layer, or section within the range without departing from the range of the present invention.

Special terms used herein is for the purpose of describing specific exemplary embodiments only and are not intended to be limiting of the present invention. The singular forms used herein include plural forms as well if the phrases do not clearly have the opposite meaning. "Including" used in the specification means that a specific feature, region, integer, step, operation, element and/or component is embodied and other specific features, regions, integers, steps, operations, elements, and/or components are not excluded.

When any part of or referred to as being "on", "over" the other part, which might be directly on or over the other parts or may be a different part involves therebetween. On the contrary, when any part is mentioned as being "directly on" the other parts, the other part is not interposed therebetween.

Unless defined otherwise, all terms including technical and scientific terms used herein have the same meaning as commonly understood by those skilled in the art to which the present invention belongs. Commonly used predefined terms are further interpreted as having a meaning consistent with the relevant technical literature and the present disclosure and are not to be construed as ideal or very formal meanings unless defined otherwise.

Hereinafter, an exemplary embodiment of the present invention will be described in detail. However, this is presented as an example, and the present invention is not limited thereto, and the present invention is just defined by the scope of claims to be described below.

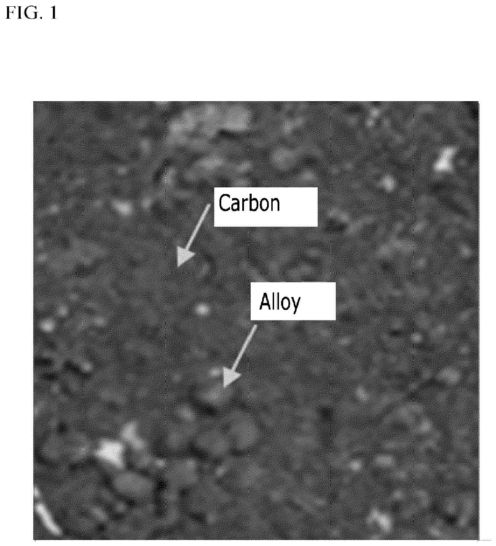

FIG. 1 is a photograph of a valuable metal recovery alloy composition and carbon according to an exemplary embodiment of the present invention.

Referring to FIG. 1, the valuable metal recovery alloy may contain a valuable metal of 45 wt% or more and the remainder as impurities, based on 100 wt% of the total composition of the alloy. The valuable metal recovery alloy may contain at least one of valuable metals such as nickel (Ni), cobalt (Co), manganese (Mn), lithium (Li), carbon (C), aluminum (Al), and copper (Cu) and remaining impurities. In this specification, the valuable metals may refer to metal components contained in the battery and mean an expensive metal component, and may mean nickel, cobalt, manganese, aluminum, copper, and lithium. In an exemplary embodiment, the valuable metal may be 70 wt% or more.

In an exemplary embodiment, the valuable metal recovery alloy may satisfy Equation 1 below.

$$< \text{Equation 1} >$$

$$0.02 \leq [C]/[Ni] \leq 7$$

([C] and [Ni] mean wt% of C and wt% Ni, respectively)

Equation 1 above is a content ratio of carbon to nickel, and a value of Equation 1 above may be 0.02 to 7, and specifically, may be 0.02 to 6, and more specifically, may be 0.02 to 3. The content ratio of the carbon to the nickel satisfies a range of Equation 1 above, so there is an advantage in that it is excellent in terms of reduction of a generation amount of carbon dioxide and efficiency of a wet reaction.

When the value of Equation 1 above is larger than 7%, there is a problem that a reaction speed is very low, and when the value of Equation 1 above is larger than 6%, the carbon is saturated in the nickel, so evaluation is difficult, and when the value of Equation 1 above is larger than 3%, there is a problem in that the amount of residual alloy remaining after reaction is excessively large. When the value of Equation 1 above is smaller than 0.02%, a ratio of oxygen increases depending on an oxygen partial pressure, causing the loss of lithium, which will be described later, and reducing efficiency in a wet reaction. In an exemplary embodiment, lithium (Li) among the valuable metals may be included in the range of 0.01 to 5 wt%

There is an advantage in that the Li recovery rate may be maximized during a Li smelting process because the lithium satisfies the above range. When the lithium deviates from an upperlimit value of the range, there is a problem in that recovery rates of Ni and Co decrease, and when the lithium deviates from a lowerlimit value of the range, the Li recovery rate decreases during the Li smelting process, and a process cost increases.

In an exemplary embodiment, the valuable metal recovery alloy may contain copper (Cu) of 0.02 wt% or more. Specifically, the valuable metal recovery alloy may be included in the range of 0.1 to 15 wet%. When the content of the copper deviates from the upper limit value of the above range, there is a problem of the process cost due to an increase in precipitation amount of $CuSO_4$, and when the content of the copper deviates from the lower limit value of the above range, it is difficult to produce low melting point Ni-Co-Mn, which increases the amount of unreacted material.

In an exemplary embodiment, the copper may form an alloy by combining with nickel (Ni) among the valuable metals. In an exemplary embodiment, the nickel may be included in the range of 5 to 40 wt%. When the nickel deviates from the upper limit value of the above range, there is a problem of a decrease in leaching speed due to the generation of nickel carbide (NisC), and when the nickel deviates from the lower limit value of the above range, there is a problem of reduced Ni recovery rate in leaching and solvent extraction.

In an exemplary embodiment, the valuable metal recovery alloy may include carbon (C) in the range of 0.1 to 10 wt%. When the carbon satisfies the above range, a real yield may be increased and the processing time in the wet process may be decreased. Specifically, the carbon may be included in the range of 1 to 7 wt%.

When the carbon deviates from the upper limit value of the above range, there is a case where the anode remains in an unreacted state, and alloying does not occur properly, and there is a problem in that the carbon remains in the form of the value metal oxide in the cathode. When the carbon deviates from the lower limit value of the above range, there is a problem in that lithium may be lost due to a high temperature.

In an exemplary embodiment, the valuable metal recovery alloy may include aluminum (Al) in the range of 0.25 to 30 wt%. When the content of the aluminum deviates from the upper limit value of the above range, there is a problem in a decrease of the Ni and Co recovery rates in the leaching and solvent extraction process, and when the content of the aluminum deviates from the lower limit value of the above range, it is difficult to produce $LiAlO_2$, which decreases the Li recovery rate.

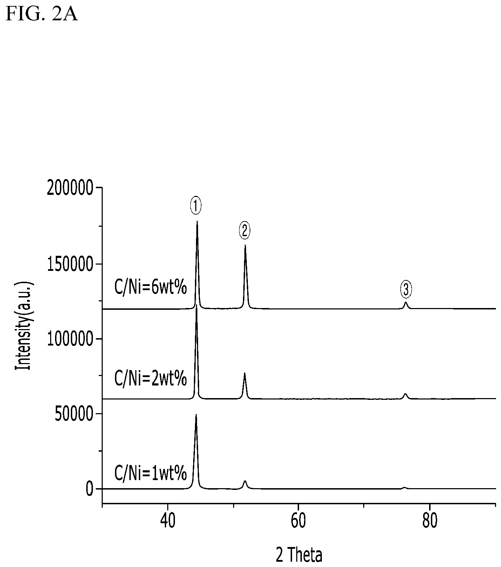

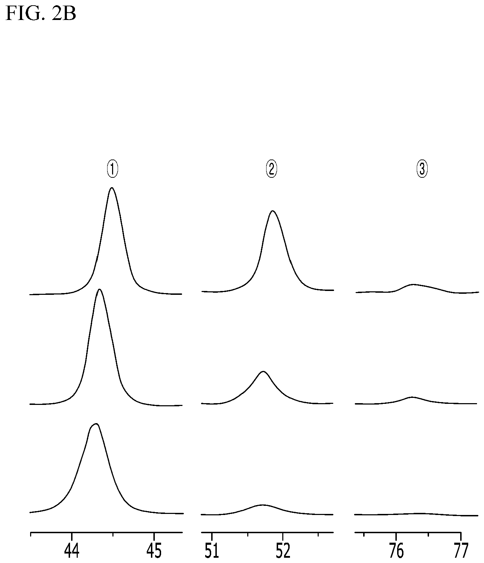

FIG. 2A illustrates an XRD peak of a value metal recovery alloy according to an exemplary embodiment of the present invention, and FIG. 2B is an enlarged diagram of peak intensity values of 44° ± 1°, 51.5° ± 1.5°, and 75.5° ± 1.5° as azimuth angles.

Referring to FIGS. 2a and 2b, in an exemplary embodiment of the present invention, the valuable metal recovery alloy may include at least one of peak intensity values of 44° ± 1°, 51.5° ± 1.5°, and 75.5° ± 1.5° as azimuth angles. In the valuable metal recovery alloy, the peak intensity value in the azimuth angle may be different according to a value of a carbon content to a nickel content in Equation 1 described above. Specifically, as the value of the carbon content to the nickel content increases, the size of the peak intensity value may increase.

It can be seen that the valuable metal recovery alloy includes at least one of the peak intensity values of the azimuth angles to include carbon and nickel, and specifically, it can be seen that a content ratio of oxygen to the nickel may be included in the scope of the present invention.

In an exemplary embodiment, the valuable metal recovery alloy may satisfy Equation 2 below.

$$< \text{Equation 2}>$$

$$0.1 < I_B/I_A < 0.98$$

(in Equation 2 above, $I_A$ represents a peak intensity value of $2\theta = 44° ± 1°$, and $I_B$ represents a peak intensity value of $2\theta = 51.5° ± 1.5°$)

Equation 2 above which is derived from a relational equation for copper and nickel satisfies Equation 1 above to provide a high valuable metal recovery alloy while minimizing carbon dioxide generation.

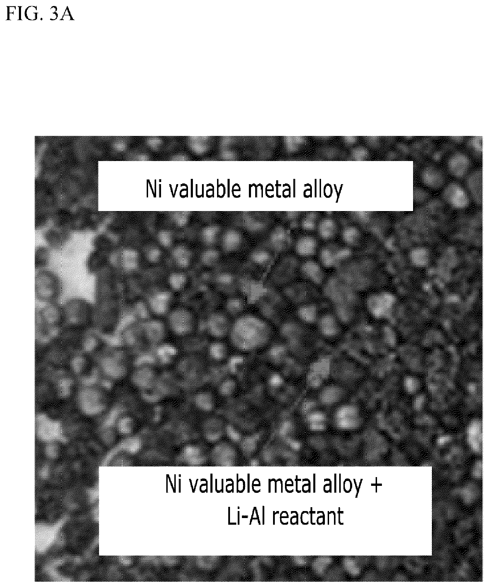

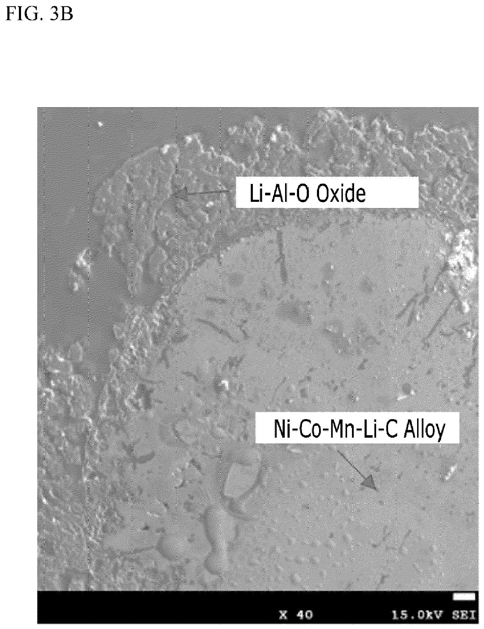

FIGS. 3A and 3B are photographs of an organization of a valuable metal recovery composition according to an exemplary embodiment of the present invention.

Referring to FIG. 3A, the valuable metal recovery composition according to an exemplary embodiment of the present invention may include a value metal recovery alloy and a lithium compound. Regarding the valuable metal recovery alloy, reference may be made to the contents described above without any contradiction. The content of the valuable metal in the valuable metal recovery composition may include 45 wt%. Specifically, the valuable metal recovery composition contains nickel as a basic component, but may include materials such as cobalt, manganese, copper, aluminum, and lithium.

In an exemplary embodiment, the lithium content in the composition may be included in the range of 0.1 to 10 wt%. Specifically, the lithium content in the composition may be included in the range of 8 to 10 wt%.

The content of the lithium in the composition may include a content of lithium included in the lithium compound in addition to the valuable metal recovery alloy. When the lithium content deviates from an upper limit value of the above range, there is a problem in that lithium is lost in a process of oxygen burns carbon rather than an oxygen-free reaction, making recovery of lithium, one of the expensive metals in the battery, impossible. When the lithium content deviates from a lower limit value of the above range, there is a problem such as a decrease in recovery rate of the valuable metal.

The lithium compound may be, for example, lithium-aluminum oxide. The lithium-aluminum oxide may be a lithium-aluminum compound, for example, lithium-aluminate ($LiAl_2O_3$). The lithium-aluminum oxide may be combined into an oxide through physical or chemical bonding between lithium contained in the composition, and the aluminum.

For example, when recovering the valuable metal from the waste battery, the valuable metal in the waste battery exists in the form of oxide, and reduction occurs by graphite in the anode at a process temperature and an oxygen atmosphere of the present invention described later. At this time, copper as a current collector is melted and exists in a liquid state and may serve to agglomerate the reduced valuable metal. Aluminum in the current collector and other current collectors participates in a partial reduction reaction with cathode oxide, and the remainder reacts with lithium and may remain as lithium-aluminum oxide.

Referring to FIG. 3B, a bonding state of the valuable metal alloy with lithium and aluminum may be confirmed. In an exemplary embodiment, the lithium compound may be bound to a portion of the surface of the valuable metal recovery alloy. The lithium compound may form a physical or chemical bond with the lithium contained in the composition, specifically, lithium disposed on the surface of the valuable metal recovery alloy.

In an exemplary embodiment, the lithium compound partially bound to the surface of the valuable metal recovery alloy may be separated by using the wet process. In another embodiment, the lithium compound may be separated from the valuable metal recovery alloy by mechanical or physical external force. As such, the valuable metal recovery alloy may be recovered from the valuable metal recovery composition, and at the same time, the lithium compound may be separated, so the amount of lost lithium may be reduced because the recovery rate of lithium is high.

In an exemplary embodiment, the valuable metal recovery composition may include a carbon-based material. For example, the carbon-based material may be a carbon (C) element. The carbon content may range from 1% to 7%. When the carbon content satisfies the above range, there is an advantage in optimizing wet processing of the valuable metal recovery composition.

When the carbon content deviates from an upper limit value of the above range, there is a problem of a decrease in leaching speed due to the generation of nickel carbide (NisC), and when the carbon content deviates from a lower limit value of the above range, contents of other impurities such as Si increase, resulting in the recovery rate of valuable metals such as Ni and Co in solvent extraction after the leaching progress.

In an exemplary embodiment, the valuable metal recovery composition may include aluminum (Al) in the range of 10 to 30 wt%. When the content of the aluminum satisfies the above range, a lithium compound may be formed through physical or chemical bonding with lithium, and as the lithium compound is separated in the future, there is an advantage in increasing the yield of lithium.

When the content of the aluminum deviates from an upper limit value of the above range, there is a problem of Ni and Co solvent extraction and crystallization process costs and decreased Ni and Co recovery rates due to excessive production in the leaching and solvent extraction process. When the aluminum content deviates from a lower limit value of the above range, there is a problem of poor production of Li-Al-O oxide due to insufficient aluminum content.

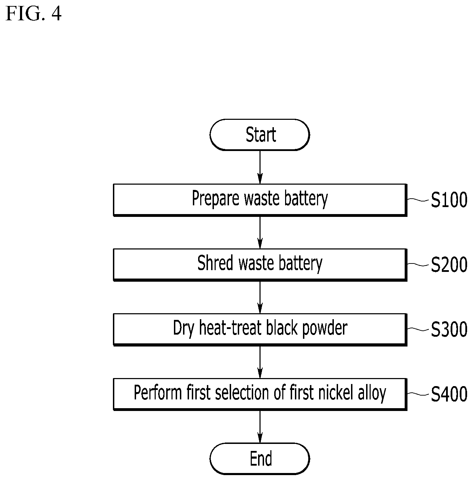

FIG. 4 is a flowchart of a method of recovering a valuable metal according to an exemplary embodiment of the present invention.

Referring to FIG. 4, in an exemplary embodiment, the valuable metal recovery method includes preparing a battery shredding material (S100), dry heat-treating the shredding material (S200), and separating the heat-treated shredding material by at least one of particle size separation and magnetic separation (S300). A method of producing an alloy having a high concentration of the valuable metal recovery alloy may be, in particular, a method of producing an alloy having a higher concentration of the valuable metal compared to a black powder that undergoes an initial shredding step. Further, the valuable metal recovery alloy produced via the production method is the same as FIG. 1 in a range which does not contradict to FIG. 1 described above.

The preparing of the battery shredding material (S100) is a step of shredding and preparing a material which becomes a base material of the battery shredding material or preparing a shredded material itself. The base material of the battery shredding material may include a battery which reaches the end of the life, positive electrode materials such as scraps, jelly rolls, and slurries constituting the waste battery, defective products generated during a production process, residues inside the production process, waste materials in a manufacturing process of a waste battery, e.g., a lithium ion battery, such as generated debris. The material which is shredded itself may be, for example, a shredded product itself such as the black powder.

In an exemplary embodiment, the preparing of a cell-based battery or battery shredding material (S100) may further include shredding the material which becomes the base material of the battery shredding material when the material which becomes the base material of the battery shredding material is shredded and prepared. A ground material of the base material of the battery shredding material may be obtained by using a shredder. The shredding as a non-limiting example may include crushing the waste battery by applying physical or mechanical force and pulverizing the waste battery into fine powder. In the shredding step, some impurities having a large size among impurities such as aluminum (Al), copper (Cu), iron (Fe), and plastic may be separated in a configuration included in the waste battery. A state in which the large impurities are separated is referred to as the black powder, and the battery shredding material such as the black powder may be produced through the shredding step.

In an exemplary embodiment, the battery shredding material may include aluminum (Al), manganese (Mn), lithium (Li), copper (Cu), cobalt (Co), nickel (Ni), carbon (C), and remaining impurities. In an exemplary embodiment, the black powder may contain 5 to 40 wt% of nickel (Ni), 1 to 20 wt% of cobalt (Co), 1 to 15 wt% of manganese (Mn), 0.5 to 5 wt% of lithium (Li), 10 to 70 wt% of carbon (C), 0.0001 to 20 wt% of aluminum (Al), and 0.0001 to 20 wt% of copper (Cu), and the total amount of impurities such as iron (Fe) and phosphorus (P) may be less than 10 wt%. The components of the black powder may vary depending on the ratio of nickel, cobalt, and manganese, and the nickel, cobalt, and manganese may be adjusted by a cathode oxide in the lithium secondary battery when the lithium secondary battery is shredded.

In an exemplary embodiment, the shredding of the material which becomes the base material of the battery may be a shredding method using at least one of shear, compression, and tensile for. Specifically, in the shredding step, the material may be shredded by, for example, at least one of a hammer mill, a ball mill, and an agitated ball mill. By the hammer mill, at least one step of disassembly, punching, and milling may be performed, and this is a non-limiting example, and it is apparent that the material may be shredded using various types of crushing or shredding devices, for example, an industrial shredder.

In an exemplary embodiment, a particle size of the battery shredding material may be within 50 mm, and specifically within 30 mm. When the particle size is larger than the above range, more energy needs to be supplied in a heat treatment step to be described below, so there is an uneconomical problem.

In an exemplary embodiment, the method may further include, before the shredding of the material that becomes the base material of the battery shredding material, a pretreatment step to prevent explosion or detoxify the base material of the battery shredding material. The method includes the pretreatment step to remove a material with a risk of explosion, such as the electrolyte in the base material, and for example, discharge the base material such as the waste battery, thereby increasing stability and increasing recovery and productivity of the valuable metal upon performing the shredding step.

In the dry heat-treating of the shredding material (S200), the shredding material is input into a heating furnace capable of raising a temperature of the shredding material to a high temperature to raise the temperature of the shredding material to at melting point or more. The dry heat-treating of the shredding material (S200) may involve a heat treatment condition for performing a high-temperature reduction reaction without going through the melting step.

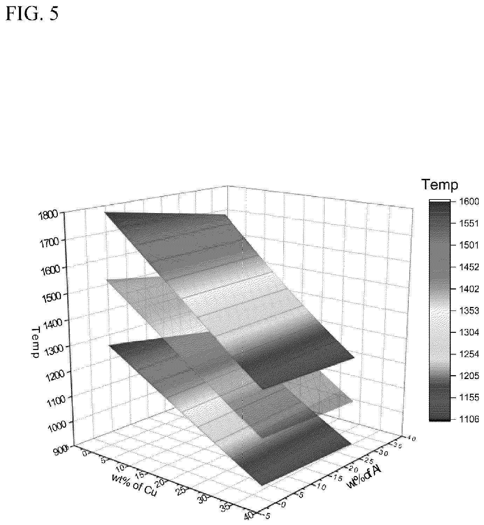

In an exemplary embodiment, the heat treatment condition may involve a heat treatment condition in the range of 900 to 1800°C. Specifically, the above range may be performed in the range of 1200 to 1800°C, more specifically in the range of 1300 to 1700°C. When the heat treatment condition deviates from an upperlimit value of the above range, there is a problem of loss due to lithium vaporization, and when the heat treatment condition deviates from a lowerlimit value of the above range, there is a problem that sintering, and reduction of the alloy elements cannot be conducted. In the above temperature range, the reduction reaction may be performed with minimal carbon dioxide generation by burning the carbon in the shredding material to a minimum. A detailed description thereof will be described below in FIG. 5.

In an exemplary embodiment, the dry heat-treating of the shredding material may be performed in a gas atmosphere of at least one of inert gas, carbon dioxide, carbon monoxide, and hydrocarbon gas. For example, the inert gas may include at least one of argon and nitrogen. By performing the reduction reaction of the shredding material in the gas atmosphere, the valuable metal recovery alloy containing the valuable metal contained in the shredding material as a component may be effectively recovered.

In an exemplary embodiment, a part of the gas atmosphere may contain impurities including a residual amount of oxygen. When the content of the oxygen among the impurities is high, carbon dioxide may be formed in combination with component of the shredding material during the reduction reaction, and as a result, the carbon dioxide is gasified together with lithium, making recovery difficult.

In an exemplary embodiment, the average oxygen partial pressure may be in the range of 0.01 to 1 atm in the dry heat treatment step (S200). Specifically, when the partial pressure of the oxygen is higher than the above value, there is a problem in that lithium is lost at a local high temperature state and a large amount of carbon dioxide is generated. When the partial pressure of the oxygen is lower than a lower limit value of the above range, there is a problem of lower Li recovery rate due to poor production of $LiAlO_2$.

Specifically, in the dry heat treatment step (S200), the valuable metal recovery composition as a valuable metal recovery composition obtained by alloying components such as nickel, cobalt, manganese, and lithium-containing oxides in the shredding material may include valuable metals and remaining impurities. The valuable metal composition may include, for example, aluminum (Al), manganese (Mn), lithium (Li), copper (Cu), cobalt (Co), nickel (Ni), carbon (C), and remaining impurities, and a detailed description thereof is the same in a range which does not contradict to the valuable metal recovery composition described above in FIG. 1.

The valuable metal recovery composition may include a lithium compound, and the lithium compound may be produced through the reduction reaction. For example, the lithium compound may be lithium-aluminate ($2LiAlO_2$), and a reaction formula for this is as follows.

[Reaction Formula 1]     $Li_2O + Al_2O_3 = 2LiAlO_2$

FIG. 5 is a graph showing a heat treatment condition depending on wt% of copper and aluminum according to an exemplary embodiment of the present invention.

Referring to FIG. 5, in an exemplary embodiment, in the dry heat treating of the shredding material (S200), the heat treatment condition may satisfy an operating reference temperature of Equation 3 below.

<Equation 3>

$$1050 \leq (1550 \pm 250) \times \exp((-0.0005 \times [Cu]) + (-0.01 \times [Al])) \leq 1800$$

(in Equation 3, [Al] represents a content (wt%) of Al contained in the shredding material, and [Cu] represents a content (wt%) of Cu included in the shredding material, and a unit of the heat treatment condition is °C)

Equation 3 shows relationships between upper limit and lower limit values of temperatures of contents of copper and aluminum. Specifically, there is an effect of promoting alloy generation because a melting point is low compared to nickel, cobalt, and manganese (Ni-Co-Mn) when adding copper based on Equation 3 above. In addition, the addition of aluminum has an effect of reducing a stabilization temperature when generating a lithium compound, for example, lithium-alumina ($LiAlO_2$).

($1550 \pm 250$) $\times \exp((-0.0005 \times [Cu]) + (-0.01 \times [Al]))$ in which ($1550$) $\times \exp((-0.0005 \times [Cu]) + (-0.01 \times [Al]))$ of Equation 3 above means an operating reference temperature. At the operating reference temperature, by considering securing a real yield of copper alloy and a real yield of lithium, the maximum and minimum temperature management range may have a temperature management range as ($1550 \pm 250$) $\times \exp((-0.0005 \times [Cu]) + (-0.01 \times [Al]))$.

In Equation 3 above, ($1550 + 250$) $\times \exp((-0.0005 \times [Cu]) + (-0.01 \times [Al]))$ as an upper limit temperature is an upper limit temperature for preventing vaporization of lithium, and in Equation 3 above, ($1550 - 250$) $\times \exp((-0.0005 \times [Cu]) + (-0.01 \times [Al]))$ is a lower limit temperature for securing a real yield through molten alloy of copper.

In an exemplary embodiment, the value of ($1550 \pm 250$) $\times \exp((-0.0005 \times [Cu]) + (-0.01 \times [Al]))$ of Equation 3 above may have a range of 1050 to 1800°C. When the value of Equation 3 above deviates from an upper limit value, there is a problem of reduced Li recovery rate due to evaporation of Li due to exposure to high temperature, and there is a problem of deviating from the commercial use temperature range of a refractory material. When the value of Equation 3 above deviates from a lower limit value, there is a problem of inferior generation of valuable metal due to a decrease in the reaction between Ni-Co-Mn oxide and carbon in the anode, and there is a problem that copper cannot be melted.

In an exemplary embodiment, the content of the aluminum in the valuable metal recovery composition may be 0.25 to 30 wt%. The addition of the aluminum has an effect of reducing a stabilization temperature when generating a lithium compound, for example, lithium-alumina ($LiAlO_2$).

When the aluminum content deviates from an upper limit value of the above range, there is a problem of reduced Li recovery rate due to generation of Li-Al-O oxide ($LiAl_{11}O_7$) having a high content of $Al_2O_3$. When the aluminum content deviates from a lower limit value of the above range, there is a problem of poor production of Li-Al-O oxide due to insufficient $Al_2O_3$ content.

Referring back to FIG. 4, in an exemplary embodiment, an agitation process may be added within the heat treatment furnace. In an exemplary embodiment, the agitation process may be added within the heat treatment furnace. For example, in the agitation process, promotion of the reaction within the heat treatment furnace, which is a high-temperature reduction furnace, and uniformity of an internal temperature may be ensured through the use of a rotating body or gas. The valuable metal recovery composition may be recovered by the reduction reaction of the black powder in the heat treatment furnace.

In the separating of the heat-treated shredding material by at least one of particle size separation and magnetic separation (S300), the heat-treated shredding material, e.g., the valuable metal recovery alloy may be separated by at least one of the particle size separation and the magnetic separation, for example. The particle size separation method as separating the particle size according to a size or a diameter of a particle may include, for example, various methods of separating the particle size by using a sieve, for example. The magnetic separation method may separate particles through a contact with a magnetic body by using the magnetic body and may adopt various types of magnetic separation methods.

In an exemplary embodiment, the separating of the heat-treated shredding material by at least one of particle size separation and magnetic separation (S300) may be a step of separating by at least one of the particle size separation, the magnetic separation, and specific gravity separation. The specific gravity difference separation method as a method of separating the particles by considering a difference in specific gravity for each material may adopt, for example, various types of specific gravity difference separation methods, which may separate the particles based on the size of the specific gravity of the particle corresponding to a specific solvent by using the specific solvent.

In an exemplary embodiment, the separating of the heat-treated shredding material by at least one of the particle size separation and the magnetic separation (S300) includes both the step of performing the particle size separation, the magnetic separation, and the particle size separation, and the step of performing the magnetic separation to separate the valuable metal recovery alloy. In the performing of only the particle size separation, the valuable metal recovery alloy may be recovered only by separating the particle size of the valuable metal recovery composition having a particle size of the valuable metal recovery composition of 100 μm) to 300 mm.

In the case of the magnetic separation, when the valuable metal recovery composition contains a material having a particle size of 100 μm or less, the valuable metal may be recovered from the valuable metal recovery composition only through the magnetic separation. In the case of the material of 100 μm or less, since the particle size is similar to that of carbon, the recovery rate of valuable metals lost only through the particle size separation may be increased through the magnetic separation.

In an exemplary embodiment, when the particle size separation and the magnetic separation are performed together, the particle size separation may be performed after the magnetic separation is performed first. By first performing the magnetic separation, it is possible to prevent the loss of the valuable metal recovery alloy from the valuable metal recovery composition of 100 μm or less.

In an exemplary embodiment, the separating of the heat-treated shredding material by at least one of particle size separation and magnetic separation (S300) may be a step of separating the shredding material from the lithium compound containing lithium. The step of separating the shredding material from the lithium compound containing lithium may be performed before or after the separating of the heat-treated shredding material by at least one of particle size separation and magnetic separation (S300).

The lithium compound may be, for example, a lithium-containing oxide, and may be separated by physical external force. For a detailed description thereof, reference may be made to the valuable metal recovery alloy of FIG. 1 without contradiction. In this way, by separating the lithium-containing oxide by the physical external force, the recovery rate of not only the valuable metal but also the lithium may be increased.

In an exemplary embodiment, a step of freezing the battery may be further included before the step of preparing the battery shredding material (S100). It is described as above that when the base material of the battery shredding material is the battery itself, the step of shredding the battery shredding material should be performed.

When using the battery as the base material for the battery shredding material, the step of freezing the battery may be included before shredding the battery shredding material. When the battery is directly shredded, explosion or fire may occur due to the electrolyte contained in the battery. Specifically, as a specific pressure is applied to the battery, the separator is physically shredded and a high current is formed due to a short circuit, so a spark is generated, and the spark may ignite the electrolyte, resulting in the fire.

In the step of freezing the battery, the battery is frozen to suppress the ignition of the liquid electrolyte contained in the battery, and then the shredding process is performed, so that the problem due to the electrolyte ignition does not occur.

In an exemplary embodiment, the step of freezing the battery may be performed by cooling to a temperature ranging from -150°C to -60°C. When the temperature of the frozen battery deviates from an upper limit value of the above range, the voltage remaining inside the battery does not drop to 0 V, which may cause a battery reaction due to a short circuit, and the electrolyte is not completely frozen, which is not appropriate.

When the temperature of the frozen battery deviates from a lower limit value of the above range, the electrolyte is sufficiently frozen and the battery's internal voltage also decreases to 0 V, and as a result, even if a short circuit occurs where positive and negative electrodes are in direct contact, the battery reaction does not occur, so the battery temperature decreases, so gas generation and combustion of the electrolyte do not occur. In addition, because the electrolyte is in a frozen state, the mobility of lithium ions is very low, so the current conduction characteristics due to lithium ion movement may be significantly reduced, and since vaporization of the electrolyte solution does not occur, flammable gases such as ethylene, propylene, and hydrogen may not be generated.

In the step of freezing the battery, when the temperature of the frozen battery deviates from the upper limit value of the above range, the voltage remaining inside the battery does not drop to 0 V, which may cause the battery reaction due to the short circuit, and the electrolyte is not completely frozen, which is not appropriate. When the temperature of the frozen battery deviates from the lower limit value of the above range, there is an uneconomical problem because a lot of energy must be administered for freezing.

In an exemplary embodiment, the step of freezing the battery may be performed by cooling to a temperature ranging from -60°C to -20°C under vacuum atmosphere conditions of 100 torr or less. The step of freezing the battery may be performed in the above temperature range, which is a temperature that may suppress the vaporization of the electrolyte solution. The vacuum atmosphere may be, for example, an inert gas, carbon dioxide, nitrogen, water, or a combination thereof.

Since the freezing step is performed by adjusting the pressure to the vacuum atmosphere of 100 torr or less, it is possible to prevent the electrolyte from reacting with oxygen by suppressing the supply of oxygen, thereby preventing explosion, and suppressing the vaporization of the electrolyte solution. Therefore, flammable gases such as ethylene, propylene, and hydrogen may not be generated.

In the step of freezing the battery, when the freezing step is performed in an air atmosphere or at a pressure exceeding 100 torr, voltage may remain in the battery, and the electrolyte is not in the frozen state in the temperature range of - 60 to -20°C, and as a result, there is a problem that the electrolyte may vaporize and explode due to sparks generated when the short circuit occurs due to the residual voltage.

In this way, according to an exemplary embodiment of the present invention, there may be provided an environmentally friendly method of manufacturing the waste battery recovery alloy in which the content of the valuable metals, such as nickel, cobalt, lithium, and manganese, is concentrated by 150 to 500% compared to the constituent content of the heat-treated battery shredding material, so the valuable metal recovery rate is excellent, and carbon of less than 10% is contained, so generation of carbon dioxide may be suppressed upon a post-process.

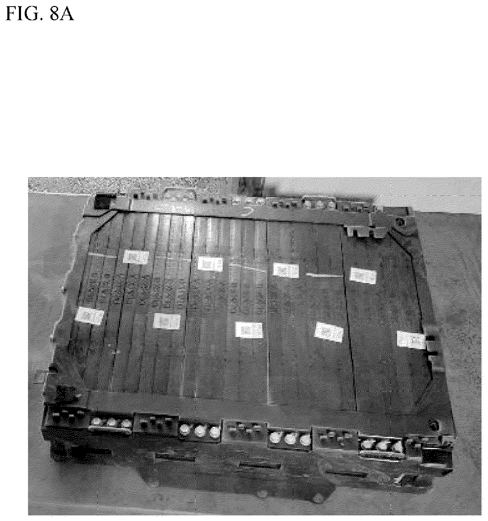

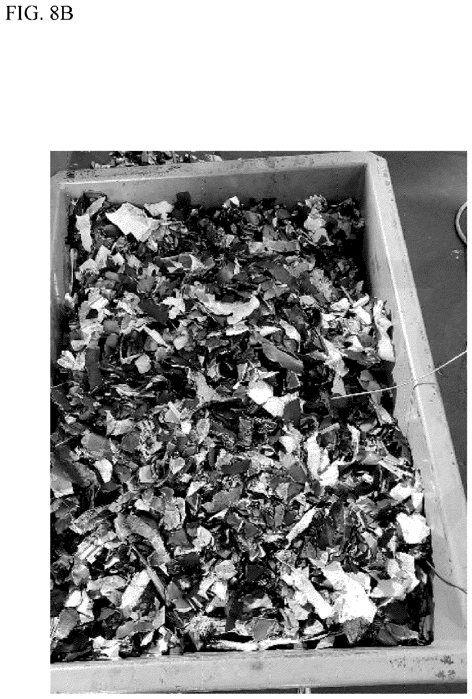

FIG. 8A illustrates the activity of lithium gas according to an exemplary embodiment of the present invention, and FIG. 8B illustrates gas generation amounts of lithium oxide according to an exemplary embodiment of the present invention.

Referring to FIG. 8A, it can be seen that when dry heat treatment is applied to the inside of the shredding material, the activity of lithium gas is excellent above 1200°C, specifically, above 1400°C. Referring to FIG. 8B, it can be seen that above 1200°C, specifically above 1400°C, the amount of lithium in the alloy increases, lithium gas activity is active, and lithium oxide is reduced.

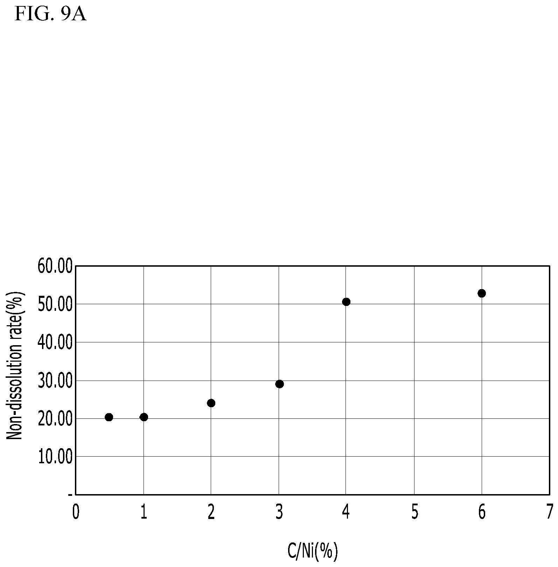

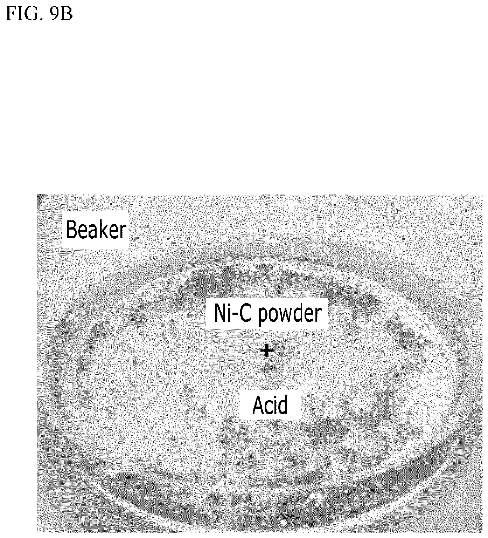

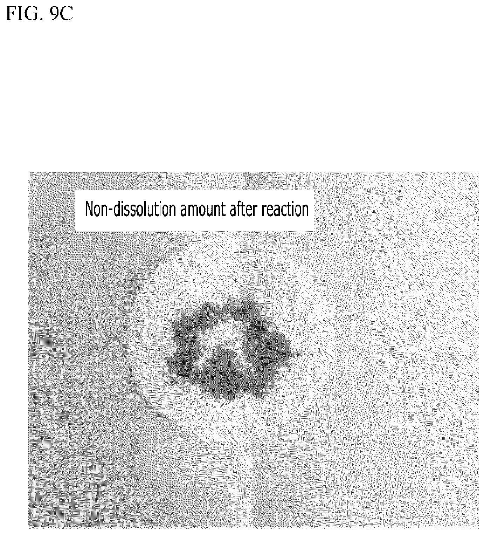

FIG. 9 is a graph of voltage change as a freezing process of a frozen battery is performed, according to an exemplary embodiment of the present invention.

Referring to FIG. 9, a battery pack shows almost the same voltage up to a high temperature of about 40°C, room temperature, and -60°C, so it can be seen that the battery characteristics are not lost. Subsequently, when the temperature decreases from -60 to -70°C, the voltage decreases rapidly, and the result is obtained that the voltage becomes 0 below -70°C, so when the battery pack is frozen to -60 to -150°C, it can be seen that a short circuit will not occur.

Specifically, when the battery is cooled in the temperature range of -150 to -60°C, the voltage remaining slightly inside the battery, for example, 2 V to 3 V, drops to almost 0 V and converges. Therefore, it can be confirmed that even if the short circuit occurs where positive and negative electrodes are in direct contact, a battery reaction does not occur, so the battery temperature does not increase, so gas generation and combustion of the electrolyte do not occur.

To explain the present invention in more detail, examples of the present invention are described. The following example is only an example of the present invention, and the present invention is not limited to the following example.

<Experimental Example>

In the experimental example of the present invention, a carbon content was measured by a combustion method using a CS analysis device (made by LECO) to analyze the carbon content. In addition, for oxygen content analysis, an oxygen content was measured using an infrared detection method using a NO analysis device (made by LECO). In addition, component analysis of inorganic substances other than carbon and oxygen was performed through ICP wet analysis.

In the experimental example of the present invention, in order to measure a particle size, a particle size analysis for each material was estimated through particle size analysis using a particle size analysis device and component analysis of the separated material through screening.

1. Step of preparing battery shredding material

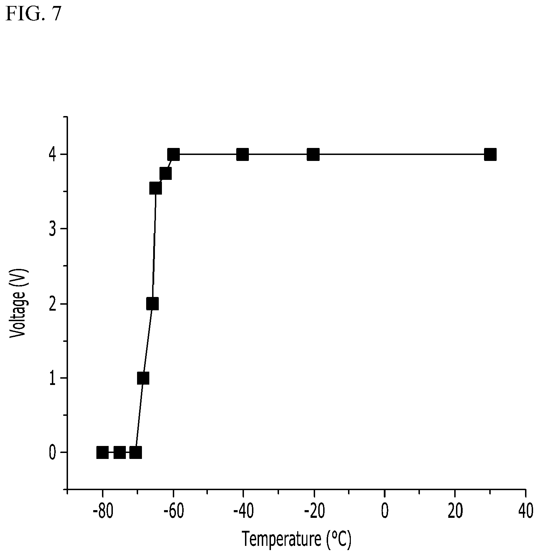

FIGS. 7A and 7B illustrate states before and after shredding of a waste battery according to an exemplary embodiment of the present invention.

Referring to FIGS. 7A and 7B, for example, a waste battery may be used among battery shredding materials. The battery shredding material may be manufactured through the step of shredding the waste battery.

2. Dry heat treatment step

< Alloy recovery amount according to process temperature >

Table 1 below shows a process oxygen fraction, an NCM shredding material amount, a recovered valuable metal alloy amount, a lithium aluminum compound amount, an unreacted material, and a process loss at process temperatures of 900, 1000, 1100, 1200, 1300, 1500, 1600, and 1700°C based on a process oxygen fraction of 0.01 atm and copper of 25 g. In the above temperature range, the battery shredding material was put into a heat treatment furnace in an argon (Ar) gas atmosphere.

(Table 1)

| No. | Process temperature [°C] | Process oxygen fraction [atm] | NCM Shredding material amount [g] | Recovered valuable metal alloy amount [g] | Lithium aluminum compound amount [g] | Impurities other than graphite, unreacted material [g] | Process loss | Lower limit of Equation 3 | Upper limit of Equation 3 | Whether Equation 3 is satisfied |
|---|---|---|---|---|---|---|---|---|---|---|
| 1 | 1000 | ⟨0.01 | 100 | 20 | 1 | 78 | 1 | 920 | 1240 | Unsatisfied |
| 2 | 1100 | ⟨0.01 | 100 | 23 | 2 | 73 | 2 | 940 | 1260 | Unsatisfied |
| 3 | 1200 | ⟨0.01 | 100 | 24 | 2.9 | 72.1 | 1 | 1008 | 1340 | Unsatisfied |
| 4 | 1300 | ⟨0.01 | 100 | 51 | 2.7 | 44.3 | 2 | 1090 | 1430 | Satisfied |
| 5 | 1400 | ⟨0.01 | 100 | 61 | 2.8 | 34.2 | 2 | 1180 | 1520 | Satisfied |
| 6 | 1500 | ⟨0.01 | 100 | 63 | 3 | 32 | 3 | 1260 | 1610 | Satisfied |
| 7 | 1600 | ⟨0.01 | 100 | 63 | 1.5 | 32 | 3.5 | 1320 | 1740 | Satisfied |
| 8 | 1700 | ⟨0.01 | 100 | 63 | 1 | 32 | 4 | 1430 | 1800 | Satisfied |

Looking at Table 1 above, it can be seen that under the same NCM shredding material amount and the same process oxygen fraction conditions, the recovered alloy amount of the valuable metal has a high value above 900°C, specifically above 1200°C. In addition, looking at the lithium aluminum compound amount, it can be confirmed that the lithium aluminum compound is included in the temperature range of 900 to 1700°C. Specifically, it can be confirmed that the lithium aluminum compound amount is large at a temperature above 1100°C, and more specifically at a temperature above 1500°C. Accordingly, it can be confirmed that there is an advantage in that the loss of lithium is reduced in the above temperature range.

< Alloy recovery amount according to process oxygen >

Table 2 below shows the content ratio of C/Ni and the ratio of Li in the alloy according to the oxygen partial pressure in the process.

(Table 2)

| No. | Maximum process temperatur e [°C] | Process oxygen fraction [at m] | NCM shredding material amount [g] | Recovered valuable metal alloy amount [g] | C/Ni in valuable metal [%] | Li in valuable metal [%] |
|---|---|---|---|---|---|---|
| 1 | 150 0 | 0.0 1 | 100 | 63 | 5.9 | 1.5 |
| 2 | 155 0 | 0.1 | 100 | 62 | 2.9 | 0.5 |
| 3 | 155 0 | 0.2 | 100 | 63 | 1.1 | 0.2 |
| 4 | 160 0 | 0.5 | 100 | 62 | 0.5 | 0.2 |
| 5 | 175 0 | 0.7 5 | 100 | 63 | <0. 01 | <0. 01 |
| 6 | 180 0 | 1 | 100 | 63 | <0. 01 | <0. 01 |

Looking at Table 2 above, the content ratio of C/Ni and the ratio of Li in the alloy according to the oxygen partial pressure in the process can be seen. It can be seen that the temperature inside a process reaction furnace increases as the amount of oxygen increases, and this can be judged to be due to the oxidation heat of carbon and oxygen.

Looking back at Table 2, it can be seen that the higher the oxygen input, the lower the C/Ni content ratio, but the loss of lithium (Li) also increases. It can be seen that when the average oxygen partial pressure in the process reactor is similar to that of the atmosphere, most of the lithium is lost, and graphite used as an anode reacts with carbon dioxide and disappears.

<Alloy recovery amount according to copper content>

Table 3 below shows the amount of alloy products according to the content of copper (Cu) in the shredding material of the waste battery. After particle size separation was performed on the alloy product, the recovered valuable metal alloy amount was confirmed according to the copper content in the shredding material.

(Table 3)

| No. | Process temperature [°C] | Process oxygen fraction [atm] | NCM shredding material amount [g] | Copper content in shredding material [%} | Recovered valuable metal alloy amount [g] |
|---|---|---|---|---|---|
| 1 | 1500 | <0.0 1 | 100 | <0.0 1 | 10 |
| 2 | 1500 | <0.0 1 | 100 | 0.02 | 40 |
| 3 | 1500 | <0.0 1 | 100 | 0.5 | 55 |
| 4 | 1500 | <0.0 1 | 100 | 1 | 60 |
| 5 | 1500 | <0.0 1 | 100 | 10 | 62 |
| 6 | 1500 | <0.0 1 | 100 | 25 | 63 |
| 7 | 1500 | <0.0 1 | 100 | 35 | 62 |
| 8 | 1500 | <0.0 1 | 100 | 45 | 63 |

Looking at Table 3 above, when a lot of copper (Cu) is included, the characteristic of collecting reduced nickel (Ni), manganese (Mn), cobalt (Co), and aluminum (Al) while liquefying at 1500°C. As the copper content decreases, the collecting characteristics deteriorate and the size of the reduced alloy is very small, making particle size separation difficult.

It can be seen that as the content of copper (Cu) decreases at a low temperature, the recovery rate obtained through the particle size separation or magnetic separation is very low. Accordingly, it can be seen that the appropriate amount of copper input is 0.02% or more.

< Wet reaction evaluation result according to ratio of C/Ni >

FIG. 7A shows a result of evaluating a wet reaction according to a content ratio of carbon to nickel according to an exemplary embodiment of the present invention, and FIGS. 7B and 7C show photos before and after reacting nickel and carbon powder with acid.

Referring to FIG. 7A, FIG. 7A is a graph showing a non-dissolution rate as a result of a wet reaction according to a carbon content ratio to nickel, FIG. 7B shows a photograph before reacting nickel and carbon powder with acid, and FIG. 7C shows a photograph after reacting the nickel and the carbon powder with the acid.

Referring back to FIG. 7A, there is a result of comparing a non-dissolution rate of a non-dissolution amount which is the amount of unreacted alloys within a specific time after putting acid for wet by using an alloy for each ratio of the content of the carbon to the nickel in order to evaluate the wet reaction according to the ratio of the carbon to nickel content. It can be seen that when the content of carbon relative to nickel includes 3%, the non-dissolution rate of the non-dissolution amount increases. Specifically, it can be seen that as the content of carbon relative to nickel increases, when the content exceeds 6%, the non-dissolution rate of the non-dissolution amount is high, so it can be judged that a reaction speed decreases.

3. Step of separating by at least one of particle size separation and magnetic separation

After conducting contact-type magnetic separation using a 5000G magnet on a sample for which the high-temperature reaction was completed, particle size separation was performed using a 250-μm sieve for the non-magnetic part, and the resulting component distribution is as shown in Table 4.

(Table 4)

| Sample | | Recovery rate (%) | | | |
|---|---|---|---|---|---|
| | | Ni | | Co | Ni |
| Magnetism Non-magnetism (<250 μm) Non-magnetism (250 μm <) | 98.0 | Ma gnetism | | 98. 0 | 57. 6 |
| | 1.9 | No n-magnetism (< 250 μm) | | 1.9 | 27. 9 |
| | 0.1 | No n-magnetism (250 μm <) | | 0.1 | 14. 5 |

From Table 4 above, it can be seen that Ni, Co, and Mn were mainly concentrated in the magnetic portion, and Cu also formed a solid solution with the concentrated metal components. In addition, the non-magnetic separated material consists of coarse lithium aluminate and micronized graphite and can be effectively separated through the particle size separation.

Approximately 98% of the total Ni and Co present in the battery were magnetic alloys and were effectively separated. Li was found to be distributed over 70% within the alloy and lithium aluminate.

The reason is that the Li-NCM alloy in which the cathode active material is reduced exhibits magnetism, and $LiAlO_2$ oxide is fused on the surface of the magnetic alloy melted, and then coagulated in the form of droplet. In addition, it can be seen that some $LiAlO_2$, as a material formed when the aluminum current collector bonded to the cathode in a plate shape is oxidized in the process of reacting with lithium, also exists independently in some cases without being fused to the surface of the alloy. $LiAlO_2$ maintaining the shape of the current collector may be separated from powdered graphite through the particle size separation.

In addition, in a different order from the above-mentioned method, when particle size separation was performed first before the magnetic separation and materials separated by 250 μm or more were further magnetically separated, the recovery rate of Ni and Co was confirmed to be approximately 78%, and the recovery rate of Li was confirmed to be approximately 60%. In this case, it can be seen that since the cathode active material in powder form, which is simply reduced and does not form the droplet, is divided into powder along with the anode active material through the particle size separation, loss of Ni, Co, and Li contained in the cathode active material occurred.

The present invention is not limited to the exemplary embodiments but may be manufactured in various different forms and it can be understood by those skilled in the art that the present invention can be executed in other detailed forms without changing the technical spirit or requisite features of the present invention. Therefore, it should be appreciated that the aforementioned embodiments are illustrative in all aspects and are not restricted.

Claims

1.  A valuable metal recovery alloy, wherein:

    based on 100 wt% of the total composition of an alloy,
    the valuable metal recovery alloy includes a valuable metal of 45 wt% and a remainder which is impurities, and

the valuable metal recovery alloy satisfies Equation 1 below.

<Equation 1>

$$0.02 \leq [C]/[Ni] \leq 7$$

([C] and [Ni] mean wt% of C and wt% of Ni, respectively)

2. The valuable metal recovery alloy of claim 1, wherein:
   the value metal is 70 wt% or more.

3. The valuable metal recovery alloy of claim 1, wherein:
   the valuable metal recovery alloy includes lithium (Li) of 0.01 to 5 wt%.

4. The valuable metal recovery alloy of claim 1, wherein:
   an XRD peak value has at least one diffraction peak among $2\theta = 44° \pm 1°$, $2\theta = 51.5° \pm 1.5°$, and $2\theta = 75.5° \pm 1.5°$.

5. The valuable metal recovery alloy of claim 1, wherein:
   the valuable metal recovery alloy satisfies Equation 2 below.

<Equation 2>

$$0.1 \langle I_B/I_A \langle 0.98$$

(in Equation 2 above, $I_A$ represents a peak intensity value of $2\theta = 44° \pm 1°$, and $I_B$ represents a peak intensity value of $2\theta = 51.5° \pm 1.5°$)

6. The valuable metal recovery alloy of claim 1, wherein:
   the valuable metal recovery alloy includes copper (Cu) of 0.02 wt% or more.

7. The valuable metal recovery alloy of claim 5, wherein:
   the copper (Cu) is bound to nickel (Ni) among the valuable metals to form an alloy.

8. The valuable metal recovery alloy of claim 1, wherein:
   the valuable metal recovery alloy includes carbon (C) of 0.1 to 10 wt%.

9. The valuable metal recovery alloy of claim 1, wherein:
   the valuable metal recovery alloy includes aluminum (Al) of 0.25 to 30 wt%.

10. The valuable metal recovery alloy of claim 1, wherein:
    the valuable metal includes at least one of lithium (Li), cobalt (Co), nickel (Ni), aluminum (Al), and manganese (Mn).

11. A valuable metal recovery composition comprising:

    a valuable metal recovery alloy; and
    a lithium compound,
    wherein a lithium content of the composition is 0.1 to 10 wt%, and
    a content of a valuable metal in the composition including the lithium content is 45 wt% or more.

12. The valuable metal recovery composition of claim 11, wherein:
    the valuable recovery alloy satisfies Equation 1 below.

<Equation 1>

$$0.02 \leq [C]/[Ni] \leq 7$$

([C] and [Ni] mean wt% of C and wt% of Ni, respectively)

13. The valuable metal recovery composition of claim 11, wherein:
the lithium compound is bound to a part of the surface of the valuable metal recovery alloy.

14. The valuable metal recovery composition of claim 13, wherein:
the lithium compound bound to a part of the surface of the valuable metal recovery alloy is separated by external force.

15. The valuable metal recovery composition of claim 11, wherein:
the valuable metal recovery composition includes a carbon-based material.

16. The valuable metal recovery composition of claim 11, wherein:
the valuable metal recovery composition includes aluminum (Al) of 10 to 30 wt%.

17. The valuable metal recovery composition of claim 11, wherein:
the valuable metal includes at least one of lithium (Li), cobalt (Co), nickel (Ni), aluminum (Al), and manganese (Mn).

18. A valuable metal recovery method comprising:

preparing a cell-based battery or battery shredding material;
dry heat-treating the shredding material, and
separating the heat-treated shredding material by at least one of particle size separation and magnetic separation,
wherein the dry heat-treating of the shredding material involves a heat treatment condition for performing a high-temperature reduction reaction at 900 to 1800°C without going through a melting step,
the heat-treatment condition satisfies an operating reference temperature of Equation 3 below, and
a lithium content is 0.1 to 10 wt% based on 100 wt% of a total composition of a valuable metal recovery composition including a valuable metal recovery alloy and a lithium compound, and a content of a valuable metal in the composition including the lithium content is 70 wt% or more and is recovered from a remainder which is impurities.

<Equation 3>

$$1050 \leq (1550 \pm 250) \times \exp((-0.0005 \times [Cu]) + (-0.01 \times [Al])) \leq 1800$$

(in Equation 3, [Al] represents a content (wt%) of Al included in the shredding material, [Cu] represents a content (wt%) of Cu included in the shredding material, and a unit of a heat treatment condition is °C)

19. The valuable metal recovery method of claim 18, wherein:
the battery shredding material includes aluminum (Al) and copper (Cu).

20. The valuable metal recovery method of claim 18, wherein:
the battery shredding material includes aluminum (Al) of 0.5 to 30 wt%.

21. The valuable metal recovery method of claim 18, wherein:
the battery shredding material includes copper (Cu) of 2.25 wt% or more.

22. The valuable metal recovery method of claim 18, wherein:
in the separating of the heat-treated shredding material by at least one of particle size separation and magnetic separation, the magnetic separation is first performed, and then the particle size separation is performed.

23. The valuable metal recovery method of claim 18, wherein:

   based on a total composition of 100 wt% of the valuable metal recovery alloy, the valuable metal recovery alloy includes lithium (Li) of 0.1 to 10 wt%, valuable metal of 45 wt% or more, and a remainder which is impurities.

24. The valuable metal recovery method of claim 18, further comprising:

   before the preparing of the battery shredding material,
   freezing a battery.

25. The valuable metal recovery method of claim 24, wherein:
   the freezing of the battery is performed by cooling the battery at -150°C to -60°C.

26. The valuable metal recovery method of claim 24, wherein:
   the freezing of the battery is performed by cooling the battery at -60°C to -20°C under a vacuum atmosphere condition of 100 torr or less.

27. The valuable metal recovery method of claim 18, wherein:
   the dry heat-treatment is performed under at least one atmosphere of reducing gas and inert gas.

28. The valuable metal recovery method of claim 18, wherein:
   in the dry heat-treatment, an average oxygen partial pressure is 0.01 to 1 atm.

29. The valuable metal recovery method of claim 18, wherein:
   the content of the valuable metal of the valuable metal recovery alloy is concentrated by 150 to 500 wt% compared to the content of the valuable metal of the shredding material.

30. The valuable metal recovery method of claim 18, wherein:
   in the dry heat-treatment, a lithium compound is generated.

31. The valuable metal recovery method of claim 18, wherein:
   the lithium compound is bound to a part of the surface of the valuable metal recovery alloy.

32. The valuable metal recovery method of claim 31, wherein:
   the lithium compound bound to a part of the surface of the valuable metal recovery alloy is separated by external force.

33. The valuable metal recovery method of claim 18, wherein:

   components of the battery shredding material include nickel (Ni) of 5 to 40 wt%, cobalt (Co) of 1 to 15 wt%, manganese (Mn) of 1 to 15 wt%, lithium (Li) of 0.5 to 5 wt%, and a remaining amount of impurities, and components of the valuable metal alloy include nickel (Ni) of 10 to 60 wt%, cobalt (Co) of 5 to 20 wt%, manganese (Mn) of 1 to 20 wt%, lithium (Li) of 3 to 15 wt%, and a remaining amount of impurities.

FIG. 1

FIG. 2A

FIG. 2B

FIG. 3A

FIG. 3B

FIG. 4

```
                    ┌─────────┐
                    │  Start  │
                    └────┬────┘
                         ↓
        ┌───────────────────────────────────┐
        │      Prepare waste battery         │──── S100
        └────────────────┬──────────────────┘
                         ↓
        ┌───────────────────────────────────┐
        │        Shred waste battery         │──── S200
        └────────────────┬──────────────────┘
                         ↓
        ┌───────────────────────────────────┐
        │     Dry heat-treat black powder    │──── S300
        └────────────────┬──────────────────┘
                         ↓
        ┌───────────────────────────────────────┐
        │ Perform first selection of first nickel alloy │──── S400
        └────────────────┬──────────────────────┘
                         ↓
                    ┌─────────┐
                    │   End   │
                    └─────────┘
```

FIG. 5

FIG. 6A

a-Li(g)

FIG. 6B

FIG. 7

FIG. 8A

FIG. 8B

FIG. 9A

FIG. 9B

FIG. 9C

Non-dissolution amount after reaction

## INTERNATIONAL SEARCH REPORT

| International application No. |
| --- |
| **PCT/KR2022/019731** |

**A. CLASSIFICATION OF SUBJECT MATTER**

**C22B 3/22**(2006.01)i; **C22B 7/00**(2006.01)i; **C22B 26/12**(2006.01)i; **C22B 21/00**(2006.01)i; **C22B 15/00**(2006.01)i; **C22B 23/02**(2006.01)i

According to International Patent Classification (IPC) or to both national classification and IPC

**B. FIELDS SEARCHED**

Minimum documentation searched (classification system followed by classification symbols)

C22B 3/22(2006.01); B02C 19/00(2006.01); B09B 5/00(2006.01); C22B 26/12(2006.01); C22B 7/00(2006.01); C22B 9/00(2006.01); H01M 10/54(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 배터리(battery), 회수(recovery), 환원(reduction), 리튬(lithium), 탄소(carbon), 니켈(nickel)

**C. DOCUMENTS CONSIDERED TO BE RELEVANT**

| Category* | Citation of document, with indication, where appropriate, of the relevant passages | Relevant to claim No. |
| --- | --- | --- |
| Y | KR 10-1883100 B1 (INDUSTRY-ACADEMIC COOPERATION FOUNDATION, YONSEI UNIVERSITY) 27 July 2018 (2018-07-27)<br>See paragraphs [0034], [0036]-[0038] and [0045]-[0055], claims 1 and 7 and figures 4a-5b. | 1-33 |
| Y | KR 10-2007-0046990 A (RECYTECH KOREA CO., LTD. et al.) 04 May 2007 (2007-05-04)<br>See paragraphs [0023]-[0030] and table 1. | 1-33 |
| A | JP 09-071825 A (MITSUI MINING & SMELTING CO., LTD.) 18 March 1997 (1997-03-18)<br>See paragraphs [0012] and [0017] and table 1. | 1-33 |
| A | JP 2020-029613 A (SUMITOMO METAL MINING CO., LTD.) 27 February 2020 (2020-02-27)<br>See paragraphs [0029] and [0040]. | 1-33 |
| A | JP 2014-199774 A (JX NIPPON MINING & METALS CORP.) 23 October 2014 (2014-10-23)<br>See paragraph [0031] and table 2. | 1-33 |

☐ Further documents are listed in the continuation of Box C.　　☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **13 March 2023** | **13 March 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2022/019731**

| Box No. III | Observations where unity of invention is lacking (Continuation of item 3 of first sheet) |
|---|---|

This International Searching Authority found multiple inventions in this international application, as follows:

Claims 1-10 pertain to a valuable metal recovery alloy in which the content ratio of carbon with respect to nickel satisfies a specific condition,
Claims 11-33 pertain to a valuable metal recovery composition having a predetermined lithium content, and a valuable metal recovery method.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**
☐ The additional search fees were accompanied by the applicant's protest and, where applicable, the payment of a protest fee.
☐ The additional search fees were accompanied by the applicant's protest but the applicable protest fee was not paid within the time limit specified in the invitation.
☐ No protest accompanied the payment of additional search fees.

Form PCT/ISA/210 (continuation of first sheet) (July 2022)

**INTERNATIONAL SEARCH REPORT**
Information on patent family members

International application No.

**PCT/KR2022/019731**

| Patent document cited in search report | | | Publication date (day/month/year) | Patent family member(s) | | | Publication date (day/month/year) |
|---|---|---|---|---|---|---|---|
| KR | 10-1883100 | B1 | 27 July 2018 | None | | | |
| KR | 10-2007-0046990 | A | 04 May 2007 | KR | 10-0717389 | B1 | 15 May 2007 |
| JP | 09-071825 | A | 18 March 1997 | JP | 3526983 | B2 | 17 May 2004 |
| JP | 2020-029613 | A | 27 February 2020 | None | | | |
| JP | 2014-199774 | A | 23 October 2014 | JP | 5657730 | B2 | 21 January 2015 |

Form PCT/ISA/210 (patent family annex) (July 2022)